# EUROPÄISCHE PATENTSCHRIFT

(11) **EP 2 884 833 B1**
(45) Veröffentlichungstag und Bekanntmachung des Hinweises auf die Patenterteilung: **08.05.2019**
(21) Anmeldenummer: 13750552.5
(22) Anmeldetag: 14.08.2013
(51) Int. Cl.: A01G 3/04

(54) **VORRICHTUNG UND VERFAHREN ZUM ENTFERNEN VON ZWEIGEN, INSBESONDERE RUTEN, AUS EINEM SPALIER**
DEVICE AND METHOD FOR REMOVING BRANCHES, IN PARTICULAR CANES, FROM AN ESPALIER
DISPOSITIF ET PROCÉDÉ POUR ÉLIMINER DES RAMEAUX, NOTAMMENT DES SARMENTS, D'UN ESPALIER

(30) Priorität: 17.08.2012 DE 202012007841 U; 22.01.2013 DE 102013001281
(43) Veröffentlichungstag der Anmeldung: 24.06.2015
(73) Patentinhaber: Heimers, Karl, 67591 Offstein (DE)
(72) Erfinder: Heimers, Karl, 67591 Offstein (DE)
(74) Vertreter: Wohlfahrt, Jan Günther
(86) Internationale Anmeldenummer: PCT/EP2013/067018
(87) Internationale Veröffentlichungsnummer: WO 2014/027038

(56) Entgegenhaltungen:
- WO-A1-2009/022915
- DE-A1-102004 031 088
- DE-U1-202004 010 709
- FR-A1- 2 719 190

## Beschreibung

Die vorliegende Erfindung betrifft Vorrichtungen und Verfahren zum Entfernen von Zweigen, insbesondere von Ruten, die von in einem Spalier wachsenden Pflanzen, insbesondere von Reben, zwar abgeschnitten, jedoch noch im Spalier gehalten sind und zumindest teilweise oberhalb des Spaliers vorstehen.

In einem Spalier wachsende Pflanzen, insbesondere Weinreben, werden in der Regel jährlich zurückgeschnitten. Bei Reben, die in einem als Drahtrahmen ausgebildeten Spalier wachsen, werden üblicherweise sämtliche vorjährigen Ruten, also Zweige, bis auf eine oder mehrere Ruten entfernt. Aber auch die nicht entfernten Ruten werden oftmals gekürzt, sodass nur noch eine bestimmte Anzahl von Augen bestehen bleibt. Aus den beim Schnitt stehen gebliebenen Augen treiben im Frühjahr die fruchttragenden Langtriebe aus, die während der Vegetationsperiode eine verhältnismäßig große Länge erreichen können. Die abgeschnittenen Ruten werden üblicherweise aus dem Spalier entfernt. Dies geschieht meist in Handarbeit, wobei diese inzwischen teilweise durch Maschinen ersetzt werden kann. So beschreiben insbesondere die DE 10 2004 031 088 A1 und die WO 2009/022915 A1 Vorrichtungen, bei denen die von Hand abgeschnittenen Ruten maschinell von oben aus dem Spalier herausgezogen werden. Dies geschieht insbesondere durch jeweils zwei gegeneinander laufende Walzen, Räder oder Reifen. Dabei ist vorgesehen, dass diese Walzen, Räder oder Reifen mit ihren Achsen parallel zum Spalier und somit auch zum Drahtverlauf des Spaliers ausgerichtet sind. Bei diesen Vorrichtungen besteht die Gefahr, dass nicht nur die Ruten durch die zwei gegeneinander laufenden Walzen oder Räder eingezogen werden, sondern auch der oberste Draht des Spaliers was dazu führen kann, dass dieser übermäßig gedehnt wird oder sogar reißen kann. Um dies zu verhindern sind Zusatzkonstruktionen entwickelt worden, die, beispielsweise in Form von vormontierten Fingerradpaaren ein Einziehen des Spalierdrahts, auch Heftdraht genannt, verhindern sollen. Alternativ kann auch vorgesehen sein, dass der Draht aus der Verankerung entfernt wird und dann durch spezielle Konstruktionen an der Maschine vorbeigeführt wird. Diese Ausführungsformen sind jedoch konstruktiv aufwändig und somit teuer und erfüllen ihren Zweck teilweise nur unzureichend.

Auch bei den bisher benutzten Maschinen, zum Beispiel dem Vine Stripper aus der WO 2009/022915 A1, wirken starke Kräfte auf den Drahtrahmen, Endstickel und Verankerung. Wenn das obere Heftdrahtpaar nicht sehr fest gespannt ist, können die beiden gegenläufigen, hydraulisch angetriebenen Räder, welche in einem Winkel von 90° zu den Rebzeilen verlaufen, die Drähte erfassen und einziehen beziehungsweise abreißen. Trotz verschiedener technischer Vorkehrungen, wie das Anbringen einer horizontalen Stange zwischen den Rädern, hydraulisch angetriebene Fingerstäbe oder die Installation eines Sternkranzes, konnte das ruckartige Rausziehen der Reben und die damit verbundene Belastung auf den ganzen Drahtrahmen nicht verhindert werden.

Das der vorliegenden Erfindung zugrundeliegende technische Problem ist die Bereitstellung einer verbesserten und vereinfachten Vorrichtung beziehungsweise eines verbesserten und vereinfachten Verfahrens zur maschinellen Entfernung von bereits abgeschnittenen Zweigen und insbesondere Ruten aus einem bepflanzten Spalier, insbesondere Rebenspalier, wobei insbesondere ein Einziehen von Spalierdrähten, insbesondere der obersten Spalierdrähte besser und einfacher verhindert wird.

Die vorliegende Erfindung löst das ihr zugrundeliegende technische Problem durch die Vorrichtung nach Anspruch 1 und das Verfahren nach Anspruch 6.

Die vorliegende Erfindung löst das ihr zugrundeliegende technische Problem insbesondere durch eine Vorrichtung zum Entfernen von Zweigen, insbesondere Ruten, die von in einem Spalier wachsenden Pflanzen, insbesondere von Reben, abgeschnitten sind, aber noch im Spalier gehalten werden und oberhalb des Spaliers vorstehen, wobei die Vorrichtung ein oberhalb des Spaliers verfahrbares rotatorisch angetriebenes Räderpaar oder Walzenpaar aufweist, wobei die Räder des Räderpaars oder die Walzen des Walzenpaars sich gegenläufig drehen können und so zueinander angeordnet sind, dass sie die Zweige kraftschlüssig einziehen und nach oben aus dem Spalier herausziehen können, gemäß Anspruch 1. Die sich aus den Achsrichtungen der Räder des Räderpaars oder der Walzen des Walzenpaars ergebenden Geraden stehen dabei insbesondere in einem Winkel zwischen 5° und 85° zu den Rebzeilen.

Die vorliegende Erfindung betrifft bevorzugt auch eine Anordnung der hydraulischen angetriebenen Räder (Walzen) im Winkel zwischen 5° und 85° zu den Rebzeilen, wobei durch die Schrägstellung der Räder keine Heftdrähte beim Entfernen der Reben eingezogen werden können. Bevorzugt sind dabei die Räder zum Herausziehen der Reben auf die Walzengröße reduziert, so dass insbesondere auch kurze Rebtriebe beim Herausziehen gefasst werden können. Bevorzugt ist eine Zuführschnecke für die Rebtriebe entweder unterhalb der Walzen angeordnet oder in die zweite Walze integriert, wobei die Heftdrähte unten gehalten werden. Bevorzugt ist die Zuführschnecke in die zweite Walze integriert und ein Ölmotor kann eingespart werden.

Dadurch, dass die sich aus den Achsrichtungen der Räder des Räderpaars oder den Walzen des Walzenpaars ergebenden Geraden in einem Winkel zwischen 5° und 85° zu den Rebzeilen stehen wird in vorteilhafter Weise ein Einziehen der Drähte, insbesondere eines oberen Drahtes, eines Spaliers verhindert. Dies wird dadurch erreicht, dass der Draht nicht in den Zwischenraum, der durch die beiden Räder oder Walzen gebildet wird, hineinreichen kann und somit nicht in den Bereich der Räder oder Walzen kommt, an dem sich die beiden Räder oder Walzen berühren oder zumindest nahezu berühren und damit die Zweige kraftschlüssig erfassen.

Die erfindungsgemäße Vorrichtung eignet sich insbesondere dann, wenn die Reben der Rebreihen in einem Spalier gehalten werden, wobei dieses einen aus mehreren an vertikalen Pfählen befestigten Spanndrähten, auch Heftdrähte genannt, gebildeten Drahtrahmen aufweist, wobei die Vorrichtung oberhalb des freien Endes der Pfähle geführt wird. Ein solcher Drahtrahmen ist im Weinbau üblich und derart bemessen, dass die zu entfernenden Ruten von Reben über das freie Ende der Pfähle hervorstehen. Die Ruten, die weiterhin wachsen sollen, werden derart gekürzt, also angeschnitten, dass sie sich unterhalb des freien Endes der Pfähle befinden und nur deren abgeschnittenes Ende über das freie Ende der Pfähle hervorragt. Damit kann die oberhalb des freien Endes der Pfähle geführte Vorrichtung die abgeschnittenen Ruten erfassen und nach oben aus dem Drahtrahmen herausziehen.

Im Zusammenhang mit der vorliegenden Erfindung ergibt sich der erfindungsgemäße Winkel aus den zwei Geraden, die durch die Achsrichtung eines Rades des Räderpaars oder einer Walze des Walzenpaars und durch die Längsrichtung der horizontal verlaufenden Drähte. Die Laufrichtung der Räder oder Walzen aus dem Stand der Technik ist im rechten Winkel zur Längsrichtung der horizontal verlaufenden Drähte angeordnet, so dass die Achsrichtung der Räderpaare oder Walzenpaare aus dem Stand der Technik somit parallel zur Längsrichtung der horizontal verlaufenden Drähte verläuft, also in einem Winkel von 0°. Dagegen ist erfindungsgemäß vorgesehen, dass beide Räder oder beide Walzen in einem Winkel von mindestens 5°, insbesondere mehr als 5° zur Längsrichtung der horizontal verlaufenden Drähte stehen.

Bevorzugt stehen die sich aus den Achsrichtungen der Räder des Räderpaars oder den Walzen des Walzenpaars ergebenden Geraden in einem Winkel von mindestens 10° zu den Rebzeilen. Bevorzugt stehen die sich aus den Achsrichtungen der Räder des Räderpaars oder den Walzen des Walzenpaars ergebenden Geraden in einem Winkel von mindestens 15° zu den Rebzeilen. Bevorzugt stehen die sich aus den Achsrichtungen der Räder des Räderpaars oder den Walzen des Walzenpaars ergebenden Geraden in einem Winkel von mindestens 20°, mehr bevorzugt mindestens 25° zu den Rebzeilen.

Bevorzugt stehen die sich aus den Achsrichtungen der Räder des Räderpaars oder den Walzen des Walzenpaars ergebenden Geraden in einem Winkel von höchstens 80° zu den Rebzeilen, mehr bevorzugt weniger als 80° zu den Rebzeilen. Bevorzugt stehen die sich aus den Achsrichtungen der Räder des Räderpaars oder den Walzen des Walzenpaars ergebenden Geraden in einem Winkel von höchstens 75° zu den Rebzeilen.

Bevorzugt stehen die sich aus den Achsrichtungen der Räder des Räderpaars oder den Walzen des Walzenpaars ergebenden Geraden in einem Winkel von mindestens 15° und von höchstens 80° zu den Rebzeilen. Bevorzugt stehen die sich aus den Achsrichtungen der Räder des Räderpaars oder den Walzen des Walzenpaars ergebenden Geraden in einem Winkel zwischen 5° und 85° zu den Rebzeilen.

Bevorzugt stehen die sich aus den Achsrichtungen der Räder des Räderpaars oder den Walzen des Walzenpaars ergebenden Geraden in einem Winkel von mindestens 30° und höchstens 70° zu den Rebzeilen.

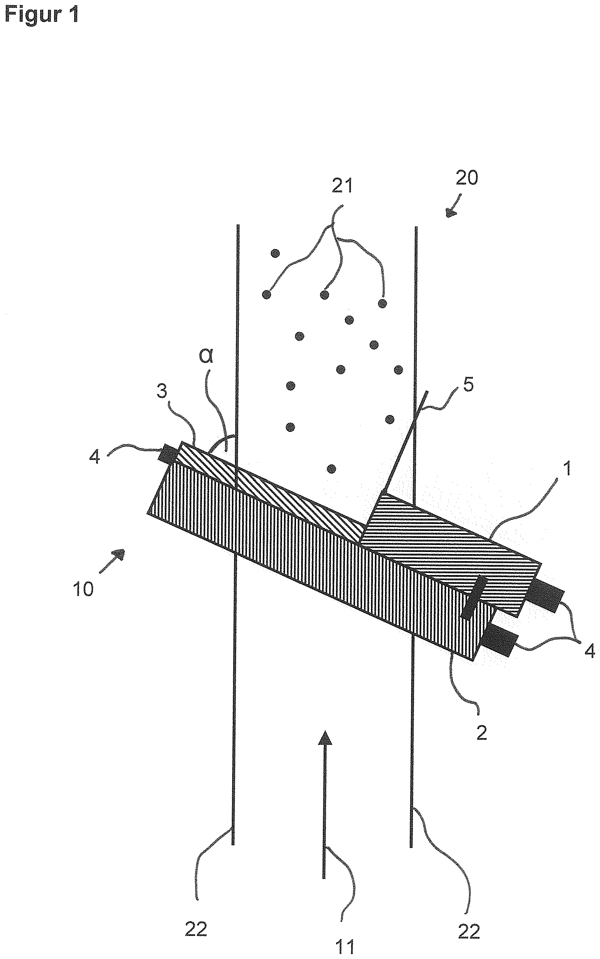

Durch die neuartige Anordnung der bevorzugt hydraulisch angetriebenen Räder oder Walzen in einem Winkel zwischen 5° und 85° zu den Rebzeilen ist ein schonendes Herausziehen möglich. Die beiden Räder, Walzen oder Reifen wirken dämpfend auf die ruckartige Ziehbewegung des Strippens und gleichzeitig ist ein Einziehen der Drähte ausgeschlossen. Zur besseren Erfassung der Reben dient bevorzugt eine Zwangszuführung durch einen Zuführstab oder durch eine Zuführschnecke. Durch die unterschiedlichen Winkeleinstellungen (5° bis 85°) kann die Maschine in vorteilhafter Weise dem individuellen Wachstum der Rebtriebe der verschiedenen Rebsorten beim Herausziehen angepasst werden. Die bevorzugt versetzte Anbringung der Räder dient der besseren Erfassung der Rebtriebe beim Überfahren der Zeilen. Gleichzeitig kann der Durchmesser der Räder reduziert werden (Tendenz zu Walzen), wodurch das Erfassen kürzerer Rebtriebe über dem Heftdrahtpaar ermöglicht wird, wie es in Figur 1 gezeigt wird.

In einer bevorzugten Ausführungsform sind die Achsrichtungen der beiden Räder des Räderpaares oder der beiden Walzen des Walzenpaares parallel zueinander angeordnet.

In einer alternativen Ausführungsform sind die Achsrichtungen der beiden Räder des Räderpaares oder der beiden Walzen des Walzenpaares in einem Winkel zwischen 0° und 85°, insbesondere zwischen 5° und 85° zueinander angeordnet. Es kann dabei also vorgesehen sein, dass die beiden Räder des Räderpaares oder der beiden Walzen des Walzenpaares nicht parallel zueinander stehen, solange beide Räder oder beide Walzen in einem Winkel zwischen 5° und 85° zu den Rebzeilen angeordnet sind. Beispielsweise kann das erste, vordere Rad oder die erste, vordere Walze in einem Winkel von 10° zur Rebzeile ausgerichtet sein und das zweite, hintere Rad oder die zweite, hintere Walze in einem Winkel von 20° zur Rebzeile ausgerichtet sein.

Somit ist der Winkel zwischen der sich aus der Achsrichtungen des ersten, vorderen Rads oder der ersten, vorderen Walze ergebenden Geraden und den Rebzeilen bevorzugt gleich groß oder kleiner als der Winkel zwischen der sich aus der Achsrichtungen des zweiten, hinteren Rads oder der zweiten, hinteren Walze ergebenden Geraden und den Rebzeilen.

Durch einen unterschiedlichen Winkel können in vorteilhafter Weise die Zweige besser zwischen die beiden Räder oder die beiden Walzen gebracht werden.

Erfindungsgemäß weist die Vorrichtung einen das Räderpaar oder Walzenpaar tragenden lageverstellbaren Ausleger auf, der mit einem Fahrzeug verbunden ist, wobei die sich aus den Achsrichtungen der Räder des Räderpaars oder der Walzen des Walzenpaars ergebenden Geraden in einem Winkel zwischen 5° und 85° zu der Längsachse des Fahrzeugs stehen. Dabei ergibt sich aus der Längsachse des Fahrzeugs die Fahrtrichtung des Fahrzeugs bei Geradeausfahrt. Da das Fahrzeug beim Entfernen der Zweige parallel zu dem Spalier und der Rebzeile und geradeaus fährt ist dieser Winkel gleich dem Winkel zu der Rebzeile. Alle dementsprechenden Ausführungsformen beziehen sich daher auch den Winkel in Relation zu der Längsachse des Fahrzeugs.

Bei dem Fahrzeug kann es sich zum Beispiel um einen Schlepper oder Traktor, insbesondere eines Schmalspurschleppers oder Überzeilenschleppers, handeln. Der Ausleger kann beispielsweise ein Frontlader oder ein seitlich an dem Fahrzeug angebrachter Ausleger sein. Selbstverständlich ist es möglich, das Fahrzeug mit zwei seitlichen Auslegern auszustatten, die jeweils ein Walzenpaar tragen, um zwei parallel zueinander verlaufende Spaliere gleichzeitig bearbeiten zu können.

In einer bevorzugten Ausführungsform ist dem Räderpaar oder dem Walzenpaar eine Zuführschnecke zugeordnet.

In einer bevorzugten Ausführungsform weist ein Rad des Räderpaars oder eine Walze des Walzenpaars eine Zuführschnecke auf. Bevorzugt weist das zweite hintere Rad oder die zweite, hintere Walze eine Zuführschnecke auf. Bevorzugt ist dabei die Zuführschnecke an das Ende des Rads oder der Walze angebracht, so dass Rad oder Walze und Zuführschnecke auf einer Achse drehbar gelagert sind. Dadurch kann ein zusätzlicher Antriebsmotor für die Zuführschnecke eingespart werden.

Alternativ ist die Zuführschnecke unterhalb der Räder oder Walzen angeordnet.

In einer bevorzugten Ausführungsform weist die Vorrichtung einen Zuführstab zum Zuführen der Zweige zu den Rädern oder Walzen auf.

Bevorzugt erfolgt der Antrieb mindestens eines der Räder oder einer der Walzen direkt oder indirekt mittels eines Hydraulikaggregates des Fahrzeuges.

In einer bevorzugten Ausführungsform sind die Räder des Räderpaars oder die Walzen des Walzenpaars hydraulisch angetrieben.

In einer bevorzugten Ausführungsform weist die Vorrichtung kein Sauggebläse auf, das zum Ansaugen von Blättern, Ästen oder den Ruten dient. Solche Sauggebläse sind aus Vorrichtungen zum Entlauben von Weinstöcken, beispielsweise aus der DE 20 2004 013 531 U1 bekannt, aber in vorteilhafter Weise für die erfindungsgemäße Vorrichtung unnötig.

Die Räder können in einer alternativen Ausführungsform bereift sein, also als Reifen ausgeführt sein.

Der weitere Grundaufbau und weitere mögliche Ausgestaltungsformen der erfindungsgemäßen Vorrichtung sind einem Fachmann bekannt, beispielsweise aus der DE 10 2004 031 088 A1 und der WO 2009/022915 A1.

In einer bevorzugten Ausführungsform dient die erfindungsgemäße Vorrichtung zum Entfernen von Zweigen, insbesondere Ruten, nach einem erfindungsgemäßen Verfahren.

Die vorliegende Erfindung betrifft auch ein Verfahren zum Entfernen von Zweigen, insbesondere Ruten, die von in einem Spalier wachsenden Pflanzen, insbesondere von Reben, abgeschnitten sind, aber noch im Spalier gehalten werden und oberhalb des Spaliers vorstehen, mittels einer Vorrichtung, die ein oberhalb des Spaliers verfahrbares rotatorisch angetriebenes Räderpaar oder Walzenpaar aufweist, wobei die Räder des Räderpaars oder die Walzen des Walzenpaars sich gegenläufig drehen und so zueinander angeordnet sind, dass sie die Zweige kraftschlüssig einziehen und nach oben aus dem Spalier herausziehen können nach Anspruch 1, wobei während des Verfahrens die sich aus den Achsrichtungen der Räder des Räderpaars oder der Walzen des Walzenpaars ergebenden Geraden in einem Winkel zwischen 5° und 85° zu den Rebzeilen gestellt werden.

In einer bevorzugten Ausführungsform weist das Spalier mindestens zwei horizontale Spanndrähte auf, die an vertikalen Pfählen befestigt sind, wobei der oberste Spanndraht oder die obersten Spanndrähte vor oder während des erfindungsgemäßen Verfahrens nicht aus den pfahlseitigen Halterungen ausgehängt wird beziehungsweise werden. Es kann also in vorteilhafter Weise auf ein mühsames Aushängen des Drahtes aus den Pfählen verzichtet werden, ohne dass es zu einer Beschädigung des Drahtes kommt.

Bevorzugt wird in dem erfindungsgemäßen Verfahren eine erfindungsgemäße Vorrichtung eingesetzt. Daher ergeben sich bevorzugte Ausführungsformen des Verfahrens, zum Beispiel in Bezug auf den Winkel aus den Ausführungen zur erfindungsgemäßen Vorrichtung.

Die vorliegende Erfindung betrifft auch die Verwendung einer Vorrichtung in einem erfindungsgemäßen Verfahren, wobei die Vorrichtung ein oberhalb des Spaliers verfahrbares rotatorisch angetriebenes Räderpaar oder Walzenpaar aufweist, wobei die Räder des Räderpaars oder die Walzen des Walzenpaars sich gegenläufig drehen können und so zueinander angeordnet sind, dass sie die Zweige kraftschlüssig einziehen und nach oben aus dem Spalier herausziehen können, wobei die sich aus den Achsrichtungen der Räder des Räderpaars oder der Walzen des Walzenpaars ergebenden Geraden in einem Winkel zwischen 5° und 85° zu den Rebzeilen einstellbar sind. Bevorzugt wird eine erfindungemäße Vorrichtung verwendet.

Bevorzugte Ausführungsformen ergeben sich auch aus den Unteransprüchen.

Die Erfindung wird nachfolgend anhand der in den Zeichnungen dargestellten Ausführungsbeispiele näher erläutert, ohne dass eine dementsprechende Beschränkung der Erfindung erfolgt.

Dabei zeigt
Figur 1 schematisch eine erfindungsgemäße Vorrichtung (10) von oben, die sich in Fahrtrichtung (11) entlang einer Rebzeile (20) bewegt. In der Rebzeile befindet sich ein Spalier aus einem gespannten Heftdrahtpaar (22), zwischen dem sich bereits abgeschnittene Rebholzruten (21) befinden. Die Vorrichtung umfasst eine erste, vordere Walze (1), die auch als Rad ausgestaltet sein kann, eine zweite, hintere Walze (2), die ebenfalls als Rad ausgestaltet sein kann, und eine unter den Walzen (1,2) montierte Zuführschnecke (3). Die Walzen (1,2) und die Zuführschnecke (3) werden je von einem Ölmotor oder Hydraulikmotor (4) angetrieben. Die beiden Walzen (1,2) und die Zuführschnecke (3) liegen etwas oberhalb des Heftdrahtpaars (22) und rotieren gegeneinander, so dass sie beim Vorwärtsfahren die Ruten (21) erfassen und nach oben ziehen. Die Ruten werden den Walzen (1,2) durch die Zuführschnecke (3) und einem Zuführstab (5) zugeführt. Es kann aber auch auf eine Zuführschnecke und/oder einen Zuführstab verzichtet werden.
   Die Erfindung zeichnet sich dadurch aus, dass die Längsachsen der Walzen (1,2) um den Winkel α zur Längsrichtung der Drähte des Heftdrahtpaars (22) versetzt sind und nicht parallel zu der Längsrichtung der Drähte verlaufen. Erfindungsgemäß beträgt der Winkel α zwischen 5° und 85°. Durch diesen Winkel können die Drähte des Heftdrahtpaars (22) nicht von den Walzen (1,2) erfasst und nach oben gezogen werden, auch wenn die Drähte mit den Walzen in Berührung kommen.

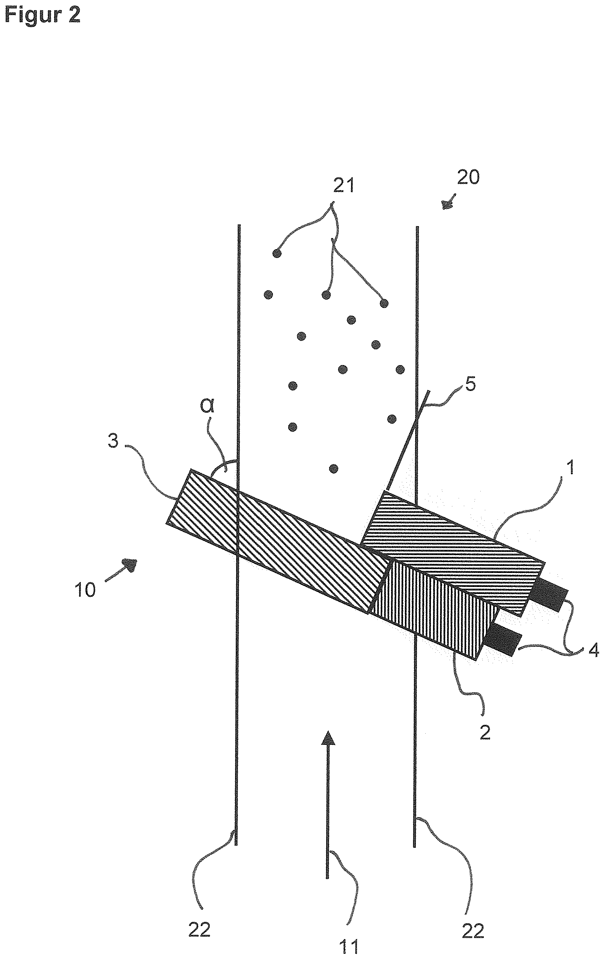

Figur 2 zeigt von oben eine alternative Ausführungsform der Vorrichtung (10) aus Figur 1. Es sind wieder die gleichen Elemente wie in Figur 1 zu sehen. Die Zuführschnecke (3) liegt auf derselben Achse wie die zweite Walze (2) oder das zweite Rad. Die Zuführschnecke (3) ist somit in das zweite Rad oder die zweite Walze (2) integriert und führt so die Rebtriebe direkt zwischen die beiden Walzen (1,2) oder Räder. Bei dieser Version wird der technische Aufwand reduziert, da auf eine separate Schnecke mit Ölmotor verzichtet werden kann. Auch hier ist der Zuführstab (5) nur fakultativ vorhanden.
   Auch hier sind die Längsachsen der Walzen (1,2) wieder erfindungsgemäß um den Winkel α zur Längsrichtung der Drähte des Heftdrahtpaars (22) versetzt. Erfindungsgemäß beträgt der Winkel α zwischen 5° und 85°.

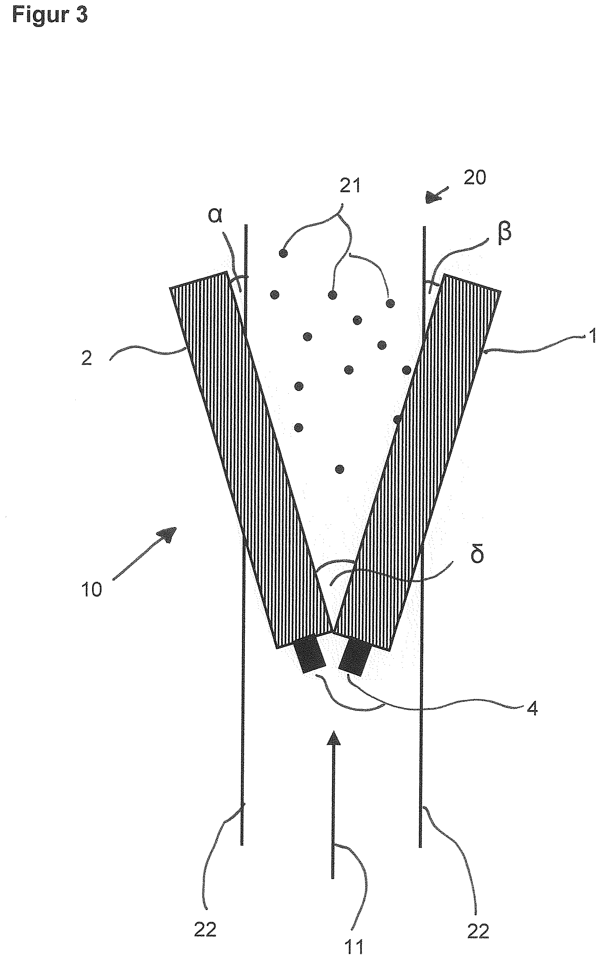

Figur 3 zeigt von oben eine weitere alternative Ausführungsform der Vorrichtung (10) aus Figur 1. Es sind wieder die gleichen Elemente wie in Figur 1 zu sehen, jedoch ist keine Zuführschnecke vorhanden. Stattdessen ist die Längsachse der ersten Walze (1) um den Winkel β zur Längsrichtung der Drähte des Heftdrahtpaars (22) versetzt und die Längsachse der zweiten Walze (2) um den Winkel a. Somit stehen die beiden Längsachsen der Walzen (1,2) im Winkel δ auseinander. Alle drei Winkel a, β und δ liegen zwischen 5° und 85°. Durch die Stellung der beiden Walzen (1,2) zueinander werden die Ruten (21) den Walzen zugeführt ohne dass eine Zuführschnecke nötig ist.

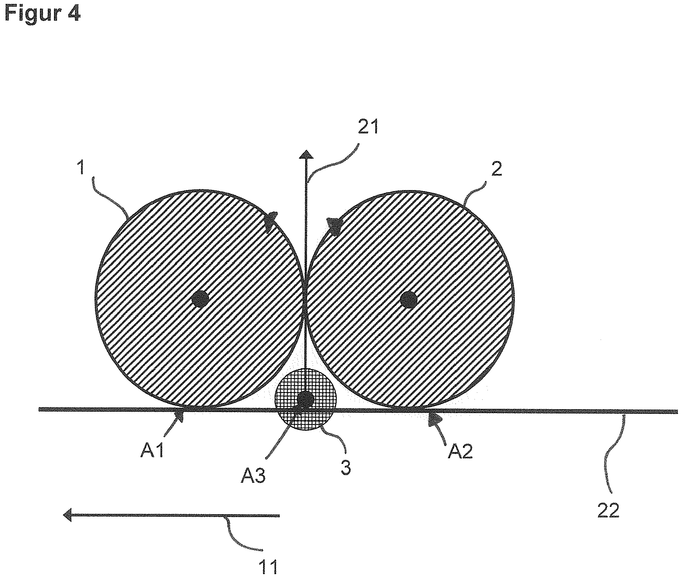

Figur 4 zeigt eine schematische Seitenansicht der erfindungsgemäßen Vorrichtung. Das erste Rad (1) oder die erste Walze dreht sich während der Fahrt in Fahrtrichtung (11) in dieser Ansicht gegen den Uhrzeigersinn und das zweite Rad (2) oder die zweite Walze dreht sich in Uhrzeigerrichtung. Dadurch werden die durch die Zuführschnecke (3) zugeführten und von den Rädern/Walzen erfassten Ruten nach oben aus dem Spalier gezogen (21). Es wird ersichtlich, dass der Draht (22) des Spaliers an den Punkten A1, A2 und A3 an den beiden Rädern (1,2) beziehungsweise an der Zuführschnecke (3) anliegt, jedoch nicht mit der Vertikalbewegung der herausziehenden Reben zwischen die beiden Räder gelangen kann.

## Patentansprüche

1. Vorrichtung (10) zum Entfernen von Zweigen (21) insbesondere Ruten, die von in einem Spalier (22) wachsenden Pflanzen, insbesondere von Reben, abgeschnitten sind, aber noch im Spalier (22) gehalten werden und oberhalb des Spaliers (22) vorstehen, wobei die Vorrichtung (10) ein oberhalb des Spaliers (22) verfahrbares rotatorisch angetriebenes Räderpaar oder Walzenpaar aufweist, wobei die Räder des Räderpaars oder die Walzen (1,2) des Walzenpaars sich gegenläufig drehen können und so zueinander angeordnet sind, dass sie die Zweige (21) kraftschlüssig einziehen und nach oben aus dem Spalier (22) herausziehen können, **dadurch gekennzeichnet, dass** die Vorrichtung (10) einen das Räderpaar oder Walzenpaar tragenden lageverstellbaren Ausleger aufweist, der mit einem Fahrzeug derart verbindbar ist, dass die sich aus den Achsrichtungen der Räder des Räderpaars oder der Walzen (1,2) des Walzenpaars ergebenden Geraden in einem Horizontalwinkel zwischen 5° und 85° zu der Längsachse des Fahrzeugs stehen.

2. Vorrichtung nach Anspruch 1, wobei die Achsrichtungen der beiden Räder des Räderpaares oder der beiden Walzen (1,2) des Walzenpaares parallel zueinander angeordnet sind.

3. Vorrichtung nach Anspruch 1, wobei die Achsrichtungen der beiden Räder des Räderpaares oder der beiden Walzen (1,2) des Walzenpaares in einem Winkel zwischen 5° und 85° zueinander angeordnet sind.

4. Vorrichtung nach einem der vorhergehenden Ansprüche, wobei dem Räderpaar oder dem Walzenpaar eine Zuführschnecke (3) zugeordnet ist.

5. Vorrichtung nach einem der vorhergehenden Ansprüche, wobei ein Rad des Räderpaars oder eine Walze (1,2) des Walzenpaars eine Zuführschnecke aufweist.

6. Verfahren zum Entfernen von Zweigen, insbesondere Ruten, die von in einem Spalier (22) wachsenden Pflanzen, insbesondere von Reben, abgeschnitten sind, aber noch im Spalier (22) gehalten werden und oberhalb des Spaliers (22) vorstehen, mittels einer Vorrichtung, (10) die ein oberhalb des Spaliers (22) verfahrbares rotatorisch angetriebenes Räderpaar oder Walzenpaar aufweist, wobei die Räder des Räderpaars oder die Walzen (1,2) des Walzenpaars sich gegenläufig drehen können und so zueinander angeordnet sind, dass sie die Zweige kraftschlüssig einziehen und nach oben aus dem Spalier (22) herausziehen können, wobei die Vorrichtung (10) einen das Räderpaar oder Walzenpaar tragenden lageverstellbaren Ausleger aufweist, der mit einem Fahrzeug derart verbindbar ist, dass die sich aus den Achsrichtungen der Räder des Räderpaars oder der Walzen (1,2) des Walzenpaars ergebenden Geraden in einem Horizontalwinkel zwischen 5° und 85° zu der Längsachse des Fahrzeugs stehen, **dadurch gekennzeichnet, dass** während des Verfahrens die sich aus den Achsrichtungen der Räder des Räderpaars oder der Walzen (1,2) des Walzenpaars ergebenden Geraden in einem Horizontalwinkel zwischen 5° und 85° zu den Rebzeilen gestellt werden.

7. Verfahren nach Anspruch 6, wobei das Spalier (22) mindestens zwei horizontale Spanndrähte (22) aufweist, die an vertikalen Pfählen befestigt sind, wobei der oberste Spanndraht nicht aus den pfahlseitigen Halterungen ausgehängt wird.

## Claims

1. A device (10) for removing branches (21), in particular canes, which have been cut from plants, in particular from vines, growing in an espalier (22), but which are still held in the espalier (22) and protrude above the espalier (22), wherein the device (10) has a rotationally driven pair of wheels or pair of rollers, which can be moved above the espalier (22), wherein the wheels of the pair of wheels or the rollers (1,2) of the pair of rollers can rotate in opposite direction and are arranged relative to one another in such a way that they can retract the branches (21) in a force-locking manner and pull upwards out of the espalier (22), **characterised in that** the device (10) has a position-adjustable beam, which supports the pair of wheels or pair of rollers and which can be connected to a vehicle in such a way that the straight lines resulting from the axial directions of the wheels of the pair of wheels or of the rollers (1,2) of the pair of rollers, are at a horizontal angle of between 5° and 85° to the longitudinal axis of the vehicle.

2. The device according to claim 1, wherein the axial directions of the two wheels of the pair of wheels or of the two rollers (1,2) of the pair of rollers are arranged parallel to one another.

3. The device according to claim 1, wherein the axial directions of the two wheels of the pair of wheels or of the two rollers (1,2) of the pair of rollers are arranged at an angle of between 5° and 85° to one another.

4. The device according to any one of the preceding claims, wherein a feeding screw (3) is assigned to the pair of wheels or the pair of rollers.

5. The device according to any one of the preceding claims, wherein one wheel of the pair of wheels or one roller (1,2) of the pair of rollers has a feeding screw.

6. A method for removing branches, in particular canes, which have been cut from plants, in particular from vines, growing in an espalier (22), but which are still held in the espalier (22) and protrude above the espalier (22), by means of a device (10), which has a rotationally driven pair of wheels or pair of rollers, which can be moved above the espalier (22), wherein the wheels of the pair of wheels or the rollers (1,2) of the pair of rollers can rotate in opposite direction and are arranged relative to one another in such a way that they can retract the branches in a force-locking manner and pull upwards out of the espalier (22), wherein the device (10) has a position-adjustable beam, which supports the pair of wheels or pair of rollers and which can be connected to a vehicle in such a way that the straight lines resulting from the axial directions of the wheels of the pair of wheels or of the rollers (1,2) of the pair of rollers, are at a horizontal angle of between 5° and 85° to the longitudinal axis of the vehicle, **characterised in that** during the movement, the straight lines resulting from the axial directions of the wheels of the pair of wheels or of the rollers (1,2) of the pair of rollers are placed at an horizontal angle of between 5° and 85° to the rows of vines.

7. The method according to claim 6, wherein the espalier (22) has at least two horizontal tension wires (22), which are fastened to vertical posts, wherein the uppermost tension wire is not unmounted from the post-side holders.

## Revendications

1. Dispositif (10) pour l'élimination de branches (21), notamment pousses, qui sont découpées de plantes, notamment de vignes, poussant dans une treille (22), mais sont encore maintenues dans la treille (22) et font saillie au-dessus de la treille (22), dans lequel le dispositif (10) présente une paire de roues ou paire de rouleaux entraînée en rotation, pouvant être déplacée au-dessus de la treille (22), dans lequel les roues de la paire de roues ou les rouleaux (1, 2) de la paire de rouleaux peuvent tourner dans un sens opposé et sont disposés l'un par rapport à l'autre de telle sorte qu'ils tirent les branches (21) de manière à former une liason due à une force et peuvent les extraire de la treille (22) vers le haut, **caractérisé en ce que** le dispositif (10) présente un bras pouvant être déplacé en position, portant la paire de roues ou paire de rouleaux qui peut être connecté à un véhicule de telle sorte que les droites résultant des directions axiales des roues de la paire de roues ou des rouleaux (1, 2) de la paire de rouleaux sont à un angle horizontal entre 5° et 85° par rapport à l'axe longitudinal du véhicule.

2. Dispositif selon la revendication 1, dans lequel les directions axiales des deux roues de la paire de roues ou des deux rouleaux (1, 2) de la paire de rouleaux sont disposées parallèlement l'une à l'autre.

3. Dispositif selon la revendication 1, dans lequel les directions axiales des deux roues de la paire de roues ou des deux rouleaux (1, 2) de la paire de rouleaux sont disposées à un angle entre 5° et 85° l'une par rapport à l'autre.

4. Dispositif selon une des revendications précédentes, dans lequel une vis transporteuse d'amenée (3) est associée à la paire de roues ou la paire de rouleaux.

5. Dispositif selon une des revendications précédentes, dans lequel une roue de la paire de roues ou un rouleau (1, 2) de la paire de rouleaux présente une vis transporteuse d'amenée.

6. Procédé pour l'élimination de branches, notamment pousses, qui sont découpées de plantes, notamment de vignes, poussant dans une treille (22), mais sont encore maintenues dans la treille (22) et font saillie au-dessus de la treille (22), au moyen d'un dispositif (10) qui présente une paire de roues ou paire de rouleaux entraînée en rotation, pouvant être déplacée au-dessus de la treille (22), dans lequel les roues de la paire de roues ou les rouleaux (1, 2) de la paire de rouleaux peuvent tourner dans un sens opposé et sont disposés l'un par rapport à l'autre de telle sorte qu'ils tirent les branches de manière à former une liason due à une force et peuvent les extraire de la treille (22) vers le haut, dans lequel le dispositif (10) présente un bras pouvant être déplacé en position, portant la paire de roues ou paire de rouleaux qui peut être connecté à un véhicule de telle sorte que les droites résultant des directions axiales des roues de la paire de roues ou des rouleaux (1, 2) de la paire de rouleaux sont à un angle horizontal entre 5° et 85° par rapport à l'axe longitudinal du véhicule, **caractérisé en ce que** les droites résultant des directions axiales des roues de la paire de roues ou des rouleaux (1, 2) de la paire de rouleaux sont placées pendant le procédé à un angle horizontal entre 5° et 85° par rapport aux rangées de vignes.

7. Procédé selon la revendication 6, dans lequel la treille (22) présente au moins deux fils de tension horizontaux (22) qui sont fixés à des piquets verticaux, dans lequel le fil de tension supérieur n'est pas décroché des fixations côté piquet.
